# EUROPEAN PATENT SPECIFICATION

(11) **EP 3 226 597 B1**
(45) Date of publication and mention of the grant of the patent: **05.02.2020**
(21) Application number: 14908682.9
(22) Date of filing: 22.12.2014
(51) Int. Cl.: H04W 16/14, H04W 84/12

(54) **METHOD AND APPARATUS FOR REDUCING INTERFERENCE BETWEEN WIFI AND LTE**
VERFAHREN UND VORRICHTUNG ZUR VERRINGERUNG DER INTERFERENZ ZWISCHEN WIFI UND LTE
PROCÉDÉ ET APPAREIL POUR RÉDUIRE LE BROUILLAGE ENTRE LE WIFI ET UN SYSTÈME D'ÉVOLUTION À LONG TERME (LTE)

(43) Date of publication of application: 04.10.2017
(73) Proprietor: HUAWEI TECHNOLOGIES CO., LTD., Shenzhen Guangdong 518129 (CN)
(72) Inventor: GAO, Weiai, Shenzhen Guangdong 518129 (CN)
(74) Representative: Gill Jennings & Every LLP
(86) International application number: PCT/CN2014/094565
(87) International publication number: WO 2016/101111

(56) References cited:
- CN-A- 102 448 127
- CN-A- 102 573 038
- CN-A- 103 874 072
- CN-A- 103 906 184
- US-A1- 2012 069 766
- US-B1- 8 340 580

## Description

### TECHNICAL FIELD

The present invention relates to the field of communications technologies, and in particular, to a method and an apparatus for reducing interference between WiFi and LTE.

### BACKGROUND

LTE (Long Term Evolution, Long Term Evolution) is Long Term Evolution of UMTS technical standards formulated by the 3GPP (The Third Generation Partnership Project, 3rd Generation Partnership Project) organization. LTE includes two modes: TDD (Time Division Duplexing, time division duplex) and FDD (Frequency Division Duplexing, frequency division duplex). Frequency bands that can be supported by TDD-LTE include frequency bands such as B38 (2750 MHz to 2620 MHz), B39 (1880 MHz to 1920 MHz), B40 (2300 MHz to 2400 MHz), B41 (2490 MHz to 2690 MHz), and frequency bands that can be supported by FDD-LTE include B7 and other frequency bands. An uplink frequency band (uplink) of the frequency band B7 is 2500 MHz to 2570 MHz, and a downlink frequency band (downlink) of the frequency band B7 is 2620 MHz to 2690 MHz.

WiFi (Wireless Fidelity, Wireless Fidelity) is a technology that can enable terminals (such as a personal computer, a mobile phone and a Pad) to be connected to each other in a wireless manner, and is used for improving interoperability between wireless network products based on the IEEE 802.11 standards. An operating frequency range of WiFi is 2400 MHz to 2483.5 MHz, and is divided into 13 WiFi channels (Channel 1 to Channel 13), and each WiFi channel has a bandwidth of 22 MHz.

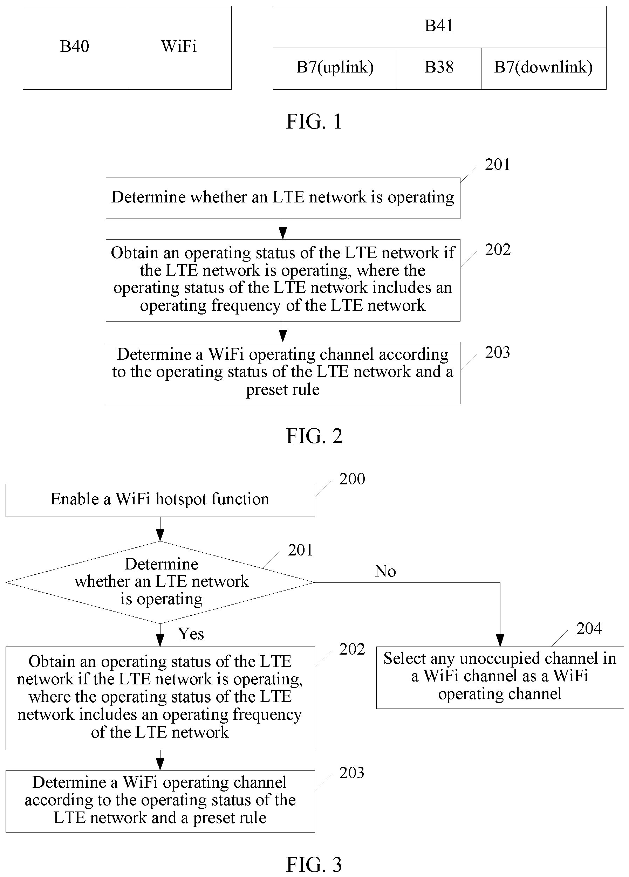

FIG. 1 is a schematic diagram of an operating frequency band of LTE and an operating frequency band of WiFi. It can be seen from the figure that there is no interval between a low frequency of WiFi and a high frequency of LTE B40, and an interval between a high frequency of WiFi and a low frequency of LTE B41 is approximately 13 MHz. In the prior art, when WiFi and LTE of a terminal coexist in operation, the terminal is connected to a base station by means of LTE, and then enables a WiFi hotspot function. However, according to different terminal products, a channel in which a WiFi hotspot is enabled to operate is fixed. Therefore, when WiFi and LTE coexist, interference can be easily generated between radio frequency signals of WiFi and LTE.

US 2012/069766 A1 discloses a System and method of hybrid FDM/TDM coexistence interference avoidance. A user equipment (UE) comprises a first radio transceiver and a second co-located radio transceiver. The UE detects coexistence interference between the two radios based on radio signal measurement. The UE sends an IDC interference indicator to its serving base station (eNB). The UE also reports IDC information including recommendation for FDM and TDM configurations to the eNB. The eNB receives the IDC interference indicator and evaluates whether to trigger FDM-based solution to mitigate the coexistence interference. The eNB also evaluates whether to trigger TDM-based solution to mitigate coexistence interference. The evaluation is based on the recommended FDM and TDM configurations. The eNB may trigger FDM-based solution, TDM-based solution, or FDM and TDM solution based on the evaluation results of the feasibility and effectiveness of each solution.

US 8340580 B1 discloses a method and apparatus for managing coexistence interference. The present disclosure provides for a wireless device that can include a transceiver that communicates with a network through an access point using a radio frequency (RF) signal on a channel. The RF signal propagates through an RF environment shared by multiple interference-susceptible wireless devices. The wireless device can also include an interference determination module that 1) detects a coexistence interference profile involving the wireless device and the multiple interference-susceptible wireless devices and 2) determines a channel change for the transceiver to communicate with the network. The wireless device can also include a channel adjuster that changes the channel accordingly to increase the integrity of signals of interference-susceptible wireless devices.

CN 103874072 A discloses a communication interference processing method which includes: obtaining an access band of a wireless wide area network and a working channel of a Wi-Fi wireless local area network; and if interference exists between the access band of the wireless wide area network and the working channel of the Wi-Fi wireless local area network, and no Wi-Fi user is currently accessing the Wi-Fi wireless local area network, changing the working channel of the Wi-Fi wireless local area network so that no interference exists between the working channel of the Wi-Fi wireless local area network after the change and the access band of the wireless wide area network. In the embodiments of the present invention, the wireless router may automatically adjust the working channel of the Wi-Fi wireless local area network, thereby effectively avoiding the problem of interference between a network signal of the wireless wide area network and a Wi-Fi signal.

CN 103906184 A discloses a method and system for selecting a WIFI channel during LTE terminal hot point coverage. The frequency band occupied by an LTE community is obtained, a first frequency point closest to the lower sideband of the frequency band occupied by a WIFI signal system and a second frequency point closest to the upper sideband of the frequency band occupied by the WIFI signal system are obtained, and therefore the middle frequency of the selected WIFI channel, namely, the target WIFI channel, is isolated from both the first frequency point and the second frequency point when the WIFI channel is selected; in other words, the middle frequency of the target WIFI channel is isolated from the frequency band occupied by the LTE community; thus, adjacent channel interference between a WIFI signal and an LTE signal can be avoided as much as possible before being generated, and reliability of a whole communication system is improved.

CN 102573038 A discloses a coexistence method of a plurality of communication modules in communication equipment and the communication equipment. The method comprises the steps of obtaining discontinuous reception (DRX) configuration information of a first module operating at a first frequency band and judging the operating status of the first module according to the DRX configuration information; wherein a second module operating at a second frequency band stops sending information when the first module is in reception status. The equipment comprises the first module and the second module. The first module operates at the first frequency band in a way of DRX; and the second module is used for obtaining DRX configuration information of the first module and judging the operating status of the first module according to the DRX configuration information and the second module stops sending information when the first module is in a reception status. The method and the equipment can be used for improving the resource utilization rate of a system.

CN 102448127 A discloses an interference information processing method and device. The method comprises the following step: when a terminal needs to activate a wireless communication system, the terminal is used for notifying the activated wireless communication system of interference information of intra-equipment interference in the terminal, which is caused by the wireless communication system to be activated and the activated wireless communication system.

The node equipment in the prior art does not know whether the terminal has intra-equipment interference or not.

The invention is defined by the method and the apparatus of the independent claims.

### SUMMARY

Embodiments of the present invention provide a method and an apparatus for reducing interference between WiFi and LTE, so as to adjust a WiFi operating channel of a terminal according to an operating status of LTE, so that when WiFi and LTE coexist, the interference is minimized, and user experience is improved.

To achieve the foregoing objectives, the following technical solutions are used in the embodiments of the present invention.

According to a first aspect, an embodiment of the present invention provides a method for reducing interference between WiFi and LTE, including:
determining whether an LTE network is operating;
obtaining an operating status of the LTE network if the LTE network is operating, where the operating status of the LTE network includes an operating frequency of the LTE network; and determining a WiFi operating channel according to the operating status of the LTE network and a preset rule, where the preset rule includes a correspondence between the operating frequency of the LTE network and a channel interference parameter between the LTE network and a WiFi channel; when the channel interference parameter is a channel interference value, the determining a WiFi operating channel according to the operating status of the LTE network and a preset rule includes:
determining a first WiFi channel according to the operating status of the LTE network and the preset rule, where the first WiFi channel is a WiFi channel that has a channel interference value less than a first threshold; and
selecting any unoccupied channel in the first WiFi channel as the WiFi operating channel.

In addition, the channel interference parameter is a throughput, and the determining a WiFi operating channel according to the operating status of the LTE network and a preset rule includes:
determining a second WiFi channel according to the operating status of the LTE network and the preset rule, where the second WiFi channel is a WiFi channel that has a throughput greater than or equal to a second threshold; and
selecting any unoccupied channel in the second WiFi channel as the WiFi operating channel.

In first possible implementation mannerof the first aspect, before the determining whether an LTE network is operating, the method further includes: enabling a WiFi hotspot function.

In any one of the first aspect or the first possible implementation manner of the first aspect, a second possible implementation manner of the first aspect is further provided, where the method further includes:
selecting any unoccupied channel in the WiFi channel as the WiFi operating channel if the LTE network is not operating.

According to a second aspect, an embodiment of the present invention provides an apparatus for reducing interference between WiFi and LTE, including:
a first determining unit, configured to determine whether an LTE network is operating;
an obtaining unit, configured to obtain an operating status of the LTE network when the first determining unit determines that the LTE network is operating, where the operating status of the LTE network includes an operating frequency of the LTE network; and
a second determining unit, configured to determine a WiFi operating channel according to the operating status of the LTE network that is obtained by the obtaining unit and a preset rule, where the preset rule includes a correspondence between the operating frequency of the LTE network and a channel interference parameter between the LTE network and a WiFi channel, wherein the second determining unit includes a determining subunit and a selection subunit, where
the determining subunit is configured to: when the channel interference parameter is a channel interference value, determine a first WiFi channel according to the operating status of the LTE network and the preset rule, where the first WiFi channel is a WiFi channel that has a channel interference value less than a first threshold; and
the selection subunit is configured to select any unoccupied channel in the first WiFi channel as the WiFi operating channel.

In addition, the channel interference parameter is a throughput, and the determining subunit is further configured to: determine a second WiFi channel according to the operating status of the LTE network and the preset rule, where the second WiFi channel is a WiFi channel that has a throughput greater than or equal to a second threshold; and
the selection subunit is further configured to select any unoccupied channel in the second WiFi channel as the WiFi operating channel.

In a first possible implementation manner of the second aspect, where the apparatus further includes an enabling unit, where the enabling unit is configured to: before the first determining unit determines whether the LTE network is operating, enable a WiFi hotspot function.

In any one of the second aspect or the first possible implementation manners of the second aspect, a second possible implementation manner of the second aspect is further provided, where the selection subunit is further configured to select any unoccupied channel in the WiFi channel as the WiFi operating channel if the LTE network is not operating.

According to the method and the apparatus for reducing interference between WiFi and LTE that are provided by the embodiments of the present invention, an operating status of an LTE network is detected, if the LTE network is in an operating status, an operating frequency of the LTE network is obtained, and a WiFi operating channel is determined according to a correspondence, between the operating status of the LTE network and a channel interference parameter between the LTE network and a WiFi operating channel, in a preset rule, so as to adjust a WiFi operating channel of a terminal according to an operating status of LTE, so that when WiFi and LTE coexist, the interference is minimized, and user experience is improved.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a frequency band of LTE and a frequency band of WiFi in the prior art;
FIG. 2 is a schematic diagram of a method for reducing interference between WiFi and LTE according to an embodiment of the present invention;
FIG. 3 is a schematic diagram of another method for reducing interference between WiFi and LTE according to an embodiment of the present invention;
FIG. 4 is a schematic diagram of an apparatus for reducing interference between WiFi and LTE according to an embodiment of the present invention;
FIG. 5 is a schematic diagram of another apparatus for reducing interference between WiFi and LTE according to an embodiment of the present invention; and
FIG. 6 is a schematic diagram of still another apparatus for reducing interference between WiFi and LTE according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

### Embodiment 1

This embodiment of the present invention provides a method for reducing interference between WiFi and LTE. As shown in FIG. 2, the method includes:
Step 201: Determine whether an LTE network is operating.
Step 202: Obtain an operating status of the LTE network if the LTE network is operating, where the operating status of the LTE network includes an operating frequency of the LTE network.

Because LTE can support multiple different frequency bands, an operating status of a current LTE network, that is, an operating frequency of the current LTE network, needs to be obtained. An operating frequency band of the current LTE network can be determined according to the operating frequency. For example, if the LTE network is operating, the obtained operating frequency of the current LTE network is 2385 MHz, and it can be determined, according to the operating frequency of 2385 MHz, that the operating frequency band of the current LTE network is B40. Optionally, the operating frequency band and the operating frequency of the current LTE network may be obtained directly.

Step 203: Determine a WiFi operating channel according to the operating status of the LTE network and a preset rule, where the preset rule includes a correspondence between the operating status of the LTE network and a channel interference parameter between the LTE network and a WiFi channel.

The channel interference parameter includes, but is not limited to, a channel interference value, a throughput and the like.

Manner 1: When the channel interference parameter is a channel interference value, the determining a WiFi operating channel according to the operating status of the LTE network and a preset rule includes:
(a1): Determine a first WiFi channel according to the operating status of the LTE network and the preset rule. The first WiFi channel is a WiFi channel that has a channel interference value less than a first threshold.

**Table 1**

| | Frequency corresponding to LTE B40/a bandwidth of 20 M | | | | | | |
|---|---|---|---|---|---|---|---|
| WiFi | 2390 | 2385 | 2380 | 2375 | 2370 | 2365 | 2360 |
| Channel | MHz | MHz | MHz | MHz | MHz | MHz | MHz |
| Chan1 | 56 | 48 | 44 | 36 | 30 | 15 | 8 |
| Chan2 | 32 | 36 | 31 | 25 | 18 | 2 | 1 |
| Chan3 | 32 | 25 | 20 | 12 | 5 | 0 | 0 |
| Chan4 | 21 | 11 | 8 | 3 | 0 | 0 | 0 |
| Chan5 | 8 | 3 | 1 | 0 | 0 | 0 | 0 |
| Chan6 | 2 | 0 | 0 | 0 | 0 | 0 | 0 |
| Chan7 | 0 | 0 | 0 | 0 | 0 | 0 | 0 |
| Chan8 | 0 | 0 | 0 | 0 | 0 | 0 | 0 |
| Chan9 | 0 | 0 | 0 | 0 | 0 | 0 | 0 |
| Chan10 | 0 | 0 | 0 | 0 | 0 | 0 | 0 |
| Chan11 | 0 | 0 | 0 | 0 | 0 | 0 | 0 |
| Chan12 | 0 | 0 | 0 | 0 | 0 | 0 | 0 |
| Chan13 | 0 | 0 | 0 | 0 | 0 | 0 | 0 |

The preset rule may be shown in Table 1. The first row represents an operating frequency band and an operating frequency of an LTE network (in Table 1, descriptions are provided by using an example in which the operating frequency band of the LTE network is B40 and a bandwidth of the LTE network is 20 M), the first column represents WiFi channels (13 in total, marked as Chan1 to Chan13), and the second row represents each operating frequency in the operating frequency band shown in the first row (in Table 1, descriptions are provided by using an example in which the operating frequency ranges from 2360 MHz to 2390 MHz and every two operating frequencies have an interval of 5 MHz). Specifically, when the LTE network is operating at 2390 MHz, interference of the 2390 MHz channel in the frequency band LTE B40 to the WiFi channel Chan1 is 56 dB, and interference of the 2390 MHz channel in the frequency band LTE B40 to the WiFi channel Chan2 is 32 dB, and by analogy, interference of the 2390 MHz channel in the frequency band LTE B40 to the WiFi channel Chan13 is 0 dB. Generally, a channel interference parameter in Row M and Column N represents a channel interference value of a given WiFi channel in a case of an operating frequency band and an operating frequency of a current LTE network (the channel interference value may be represented by dB). It should be noted that Table 1 is only an exemplary description of the preset rule, and any other manners that can represent the preset rule all fall within the protection scope of the present invention. Moreover, for different terminal devices, specific values in Table 1 may be set according to an actual test and measurement.

As shown in Table 1, when the LTE network is operating in the frequency band LTE B40 and has a bandwidth of 20 M and an operating frequency of 2390 MHz, channel interference values of the WiFi channels decrease gradually from Chan1 to Chan13. Therefore, a WiFi channel that has a channel interference value less than a first threshold may be used as the first WiFi channel. In this case, interference between the first WiFi channel and the operating status of the current LTE network is relatively small. As shown in Table 1, assuming that the first threshold is 0 dB, the first WiFi channel includes Chan7 to Chan13.

(a2): Select any unoccupied channel in the first WiFi channel as the WiFi operating channel.

According to descriptions in (a1), if Chan7 to Chan13 are selected as first WiFi channels, any unoccupied channel in Chan7 to Chan13 is selected as a WiFi operating channel. For example, when Chan7 is already occupied, a channel conflict will occur if Chan7 is selected at this time. Therefore, any unoccupied WiFi channel in Chan8 to Chan13 may be selected as the WiFi operating channel.

Manner 2: When the channel interference parameter is a throughput, the determining a WiFi operating channel according to the operating status of the LTE network and a preset rule includes:
(b1): Determine a second WiFi channel according to the operating status of the LTE network and the preset rule, where the second WiFi channel is a WiFi channel that has a throughput greater than or equal to a second threshold.

**Table 2**

| | Frequency corresponding to LTE B40/a bandwidth of 20 M | | | | | | |
|---|---|---|---|---|---|---|---|
| WiFi | 2390 | 2385 | 2380 | 2375 | 2370 | 2365 | 2360 |
| Channel | MHz | MHz | MHz | MHz | MHz | MHz | MHz |
| Chan1 | 0 | 0 | 1.5 | 8.2 | 31 | 45.2 | 47.6 |
| Chan2 | 0 | 0 | 2.8 | 10.3 | 35 | 45.8 | 48.2 |
| Chan3 | 0 | 6 | 14 | 25 | 46 | 54 | 54 |
| Chan4 | 2.5 | 16 | 25 | 36 | 54 | 54 | 54 |
| Chan5 | 12 | 32 | 38 | 54 | 54 | 54 | 54 |
| Chan6 | 38 | 54 | 54 | 54 | 54 | 54 | 54 |
| Chan7 | 54 | 54 | 54 | 54 | 54 | 54 | 54 |
| Chan8 | 54 | 54 | 54 | 54 | 54 | 54 | 54 |
| Chan9 | 54 | 54 | 54 | 54 | 54 | 54 | 54 |
| Chan10 | 54 | 54 | 54 | 54 | 54 | 54 | 54 |
| Chan11 | 54 | 54 | 54 | 54 | 54 | 54 | 54 |
| Chan12 | 54 | 54 | 54 | 54 | 54 | 54 | 54 |
| Chan13 | 54 | 54 | 54 | 54 | 54 | 54 | 54 |

The preset rule may be shown in Table 2. The first row represents an operating frequency band and an operating frequency of an LTE network (in Table 2, descriptions are provided by using an example in which the operating frequency band of the LTE network is B40 and a bandwidth of the LTE network is 20 M), the first column represents WiFi channels (13 in total, marked as Chan1 to Chan13), and the second row represents each operating frequency in the operating frequency band shown in the first row (in Table 2, descriptions are provided by using an example in which the operating frequency ranges from 2360 MHz to 2390 MHz and every two operating frequencies have an interval of 5 MHz). Specifically, when the LTE network is operating at 2390 MHz, a throughput of the WiFi channel Chan1 is 0 Mbps, and a throughput of the WiFi channel Chan2 is 0 Mbps, and by analogy, a throughput of the WiFi channel Chan13 is 54 Mbps. Generally, a throughput in Row M and Column N represents a throughput of a given WiFi channel in a case of an operating frequency band and an operating frequency of a current LTE network. It should be noted that Table 2 is only an exemplary description of the preset rule, and any other manners that can represent the preset rule all fall within the protection scope of the present invention. Moreover, for different terminal devices, specific values in Table 2 may be set according to an actual test and measurement.

As shown in Table 2, when the LTE network is operating in the frequency band LTE B40 and has a bandwidth of 20 M and an operating frequency of 2390 MHz, throughputs of the WiFi channels increase gradually from Chan1 to Chan13, the increase in the throughputs means a decrease in interference between two channels. Therefore, a WiFi channel that has a throughput greater than or equal to a second threshold may be used as a second WiFi channel. In this case, interference between the second WiFi channel and the operating status of the current LTE network is relatively small. As shown in Table 2, assuming that the second threshold is 54 dB, the second WiFi channel includes Chan7 to Chan13.

(b2): Select any unoccupied channel in the second WiFi channel as the WiFi operating channel.

According to descriptions in b1, if Chan7 to Chan13 are selected as second WiFi channels, any unoccupied channel in Chan7 to Chan13 is selected as a WiFi operating channel. For example, when Chan7 is already occupied, a channel conflict will occur if Chan7 is selected at this time. Therefore, any unoccupied WiFi channel in Chan8 to Chan13 may be selected as the WiFi operating channel.

Further, as shown in FIG. 3, before step 201, the method further includes:
Step 200: Enable a WiFi hotspot function.

As shown in FIG. 3, after step 201, the method may further include:
Step 204: Select any unoccupied channel in the WiFi channel as the WiFi operating channel when the LTE network is not operating.

Specifically, because the LTE network is not operating at this time, there is no problem of interference between the LTE network and the WiFi channel, so that any unoccupied channel in the WiFi channels (that is, Chan1 to Chan13) may be selected as the WiFi operating channel.

According to the method for reducing interference between WiFi and LTE that is provided by this embodiment of the present invention, an operating status of an LTE network is detected, if the LTE network is in an operating status, an operating frequency of the LTE network is obtained, and a WiFi operating channel is determined according to a correspondence, between the operating status of the LTE network and a channel interference parameter between the LTE network and a WiFi operating channel, in a preset rule, so as to adjust a WiFi operating channel of a terminal according to an operating status of LTE, so that when WiFi and LTE coexist, the interference is minimized, and user experience is improved.

### Embodiment 2

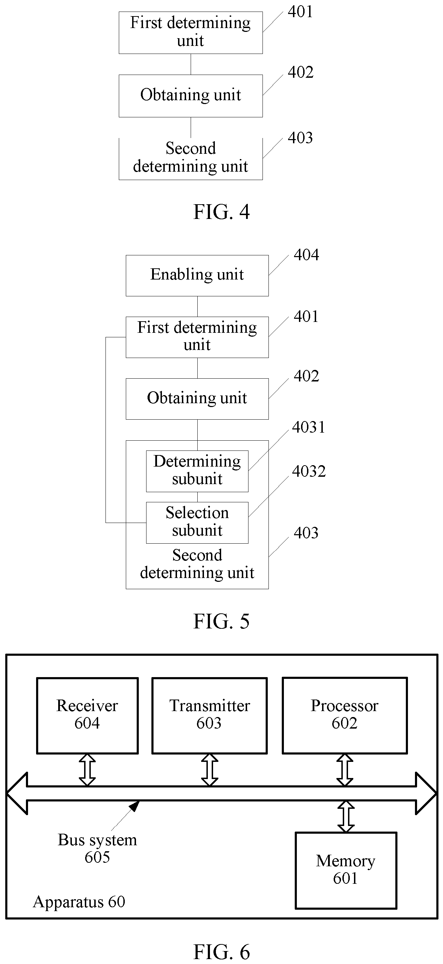

This embodiment of the present invention provides an apparatus for reducing interference between WiFi and LTE. The apparatus corresponds to the method for reducing interference between WiFi and LTE described in Embodiment 1. As shown in FIG. 4, the apparatus includes:
a first determining unit 401, configured to determine whether an LTE network is operating;
an obtaining unit 402, configured to obtain an operating status of the LTE network when the first determining unit 401 determines that the LTE network is operating, where the operating status of the LTE network includes an operating frequency of the LTE network; and
a second determining unit 403, configured to determine a WiFi operating channel according to the operating status of the LTE network and a preset rule obtained by the obtaining unit 402, where the preset rule includes a correspondence between the operating status of the LTE network and a channel interference parameter between the LTE network and a WiFi channel.

Optionally, as shown in FIG. 5, the second determining unit 403 includes a determining subunit 4031 and a selection subunit 4032, where
the determining subunit 4031 is configured to: when the channel interference parameter is a channel interference value, determine a first WiFi channel according to the operating status of the LTE network and the preset rule, where the first WiFi channel is a WiFi channel that has a channel interference value less than a first threshold; and
the selection subunit 4032 is configured to select any unoccupied channel in the first WiFi channel as the WiFi operating channel.

Optionally, as shown in FIG. 5, the determining subunit 4031 is further configured to: when the channel interference parameter is a throughput, determine a second WiFi channel according to the operating status of the LTE network and the preset rule, where the second WiFi channel is a WiFi channel that has a throughput greater than or equal to a second threshold; and
the selection subunit 4032 is further configured to select any unoccupied channel in the second WiFi channel as the WiFi operating channel.

Optionally, as shown in FIG. 5, this apparatus further includes an enabling unit 404, where the enabling unit 404 is configured to: before the first determining unit 401 determines whether the LTE network is operating, enable a WiFi hotspot function.

Optionally, as shown in FIG. 5, the selection subunit 4032 is further configured to select any unoccupied channel in the WiFi channel as the WiFi operating channel if the LTE network is not operating.

According to the apparatus for reducing interference between WiFi and LTE that is provided by this embodiment of the present invention, the first determining unit determines an operating status of an LTE network, and if it is determined that the LTE network is in an operating status, the second determining unit determines a WiFi operating channel according to an operating frequency of the LTE network that is obtained by the obtaining unit, and according to a correspondence, between the operating status of the LTE network and a channel interference parameter between the LTE network and a WiFi operating channel, in a preset rule, so as to adjust a WiFi operating channel of a terminal according to an operating status of LTE, so that when WiFi and LTE coexist, the interference is minimized, and user experience is improved.

### Embodiment 3

This embodiment of the present invention provides an apparatus 60 for reducing interference between WiFi and LTE. As shown in FIG. 6, the apparatus 60 includes a memory 601, a processor 602, a transmitter 603 (optional), a receiver 604 (optional) and a bus system 605.

The memory 601 may include a read-only memory and a random access memory, and provides an instruction and data to the processor 602. A part of the memory 601 may further include a non-volatile random access memory (NVRAM).

The memory 601 stores the following elements, executable modules or data structures, or a subset thereof, or an extended set thereof:
operation instructions, including various operation instructions and used to perform various operations; and
an operating system, including various system programs and used to implement various basic services and process a hardware-based task.

In this embodiment of the present invention, the processor 602 invokes the operation instructions stored in the memory 601 to perform the following operations: determining whether an LTE network is operating; obtaining an operating status of the LTE network if the LTE network is operating, where the operating status of the LTE network includes an operating frequency of the LTE network; and determining a WiFi operating channel according to the operating status of the LTE network and a preset rule, where the preset rule includes a correspondence between the operating status of the LTE network and a channel interference parameter between the LTE network and a WiFi channel.

Optionally, the processor 602 is further configured to: when the channel interference parameter is a channel interference value, determine a first WiFi channel according to the operating status of the LTE network and the preset rule. The first WiFi channel is a WiFi channel that has a channel interference value less than a first threshold; and select any unoccupied channel in the first WiFi channel as the WiFi operating channel.

Optionally, the processor 602 is further configured to: when the channel interference parameter is a throughput, determine a second WiFi channel according to the operating status of the LTE network and the preset rule, where the second WiFi channel is a WiFi channel that has a throughput greater than or equal to a second threshold; and select any unoccupied channel in the second WiFi channel as the WiFi operating channel.

Optionally, the processor 602 is further configured to: before determining whether the LTE network is operating, enable a WiFi hotspot function.

Optionally, the processor 602 is further configured to select any unoccupied channel in the WiFi channel as the WiFi operating channel if the LTE network is not operating.

The processor 602 may be, for example, a CPU (Central Processing Unit, central processing unit). The memory 601 may include a read-only memory and a random access memory, and provides an instruction and data to the processor 602. A part of the memory 601 may further include a non-volatile random access memory (NVRAM). In specific application, components of the apparatus for reducing interference between WiFi and LTE are coupled together by using the bus system 605, where besides a data bus, the bus system 605 may further include a power bus, a control bus, a state signal bus, and the like. However, for clear description, various types of buses in the figure are marked as the bus system 605.

The method disclosed in the foregoing embodiment of the present invention may be applied to the processor 602, or be implemented by the processor 602. The processor 602 may be an integrated circuit chip and has a signal processing capability. In an implementation process, each step of the foregoing method may be implemented by a hardware integrated logic circuit in the processor 602 or by an instruction in a software form. The foregoing processor 602 may be a general purpose processor, a digital signal processor (DSP), an application-specific integrated circuit (ASIC), a field programmable gate array (FPGA), or another programmable logic device, discrete gate or transistor logic device, or discrete hardware component. The methods, steps, and logical block diagrams disclosed in the embodiments of the present invention may be implemented or performed. The general purpose processor may be a microprocessor or the processor 602 may be any conventional processor and the like. Steps of the methods disclosed with reference to the embodiments of the present invention may be directly performed and completed by means of a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically-erasable programmable memory, or a register. The storage medium is located in the memory 601, and the processor 602 reads information in the memory 601 and completes the steps in the foregoing methods in combination with hardware of the processor 602.

According to the apparatus for reducing interference between WiFi and LTE that is provided by this embodiment of the present invention, an operating status of an LTE network is determined, and if it is determined that the LTE network is in an operating status, a WiFi operating channel is determined according to an operating frequency of the LTE network that is obtained by an obtaining unit, and according to a correspondence, between the operating status of the LTE network and a channel interference parameter between the LTE network and a WiFi operating channel, in a preset rule, so as to adjust a WiFi operating channel of a terminal according to an operating status of LTE, so that when WiFi and LTE coexist, the interference is minimized, and user experience is improved.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

## Claims

1. A method for reducing interference between WiFi and LTE, comprising:
determining (S201) whether an LTE network is operating;
obtaining (S202) an operating status of the LTE network if the LTE network is operating, wherein the operating status of the LTE network comprises an operating frequency of the LTE network; and
determining (S203) a WiFi operating channel according to the operating status of the LTE network and a preset rule, wherein the preset rule comprises a correspondence between the operating frequency of the LTE network and a channel interference parameter between the LTE network and a WiFi channel;
wherein when the channel interference parameter is a channel interference value, the determining a WiFi operating channel according to the operating status of the LTE network and a preset rule comprises:
determining (a1) a first WiFi channel according to the operating status of the LTE network and the preset rule, wherein the first WiFi channel is a WiFi channel that has a channel interference value less than a first threshold; and
selecting (a2) any unoccupied channel in the first WiFi channel as the WiFi operating channel;
**characterised in that** the channel interference parameter is a throughput and the determining a WiFi operating channel according to the operating status of the LTE network and a preset rule comprises:
determining (b1) a second WiFi channel according to the operating status of the LTE network and the preset rule, wherein the second WiFi channel is a WiFi channel that has a throughput greater than or equal to a second threshold; and
selecting (b2) any unoccupied channel in the second WiFi channel as the WiFi operating channel.

2. The method according to claim 1, wherein before the determining whether an LTE network is operating, the method further comprises: enabling (S200) a WiFi hotspot function.

3. The method according to claim 1 or claim 2, wherein the method further comprises:
selecting (S204) any unoccupied channel in the WiFi channel as the WiFi operating channel if the LTE network is not operating.

4. An apparatus for reducing interference between WiFi and LTE, comprising:
a first determining unit (401), configured to determine whether an LTE network is operating;
an obtaining unit (402), configured to obtain an operating status of the LTE network when the first determining unit (401) determines that the LTE network is operating, wherein the operating status of the LTE network comprises an operating frequency of the LTE network; and
a second determining unit (403), configured to determine a WiFi operating channel according to the operating status of the LTE network that is obtained by the obtaining unit (402) and a preset rule, wherein the preset rule comprises a correspondence between the operating frequency of the LTE network and a channel interference parameter between the LTE network and a WiFi channel,
wherein the second determining unit (403) comprises a determining subunit (4031) and a selection subunit (4032), wherein
the determining subunit (4031) is configured to: when the channel interference parameter is a channel interference value, determine a first WiFi channel according to the operating status of the LTE network and the preset rule, wherein the first WiFi channel is a WiFi channel that has a channel interference value less than a first threshold; and
the selection subunit (4032) is configured to select any unoccupied channel in the first WiFi channel as the WiFi operating channel;
**characterized in that**:
the channel interference parameter is a throughput and the determining subunit (4031) is further configured to: determine a second WiFi channel according to the operating status of the LTE network and the preset rule, wherein the second WiFi channel is a WiFi channel that has a throughput greater than or equal to a second threshold; and
the selection subunit (4032) is further configured to select any unoccupied channel in the second WiFi channel as the WiFi operating channel.

5. The apparatus according to claim 4, wherein the apparatus further comprises an enabling unit (404), wherein the enabling unit (404) is configured to: before the first determining unit (401) determines whether the LTE network is operating, enable a WiFi hotspot function.

6. The apparatus according to claim 4 or claim 5 wherein the selection subunit (4032) is further configured to select any unoccupied channel in the WiFi channel as the WiFi operating channel if the LTE network is not operating.

## Patentansprüche

1. Verfahren zum Reduzieren einer Interferenz zwischen WiFi und LTE, das Folgendes umfasst:
Bestimmen (S201), ob ein LTE-Netzwerk in Betrieb ist;
Erhalten (S202) eines Betriebsstatus des LTE-Netzwerks, wenn das LTE-Netzwerk in Betrieb ist, wobei der Betriebsstatus des LTE-Netzwerks eine Betriebsfrequenz des LTE-Netzwerks umfasst; und
Bestimmen (S203) eines WiFi-Betriebskanals gemäß dem Betriebsstatus des LTE-Netzwerks und einer voreingestellten Regel, wobei die voreingestellte Regel eine Entsprechung zwischen der Betriebsfrequenz des LTE-Netzwerks und einem Kanalinterferenzparameter zwischen dem LTE-Netzwerk und einem WiFi-Kanal umfasst;
wobei, wenn der Kanalinterferenzparameter ein Kanalinterferenzwert ist, das Bestimmen des WiFi-Betriebskanals gemäß dem Betriebsstatus des LTE-Netzwerks und einer voreingestellten Regel Folgendes umfasst:
Bestimmen (a1) eines ersten WiFi-Kanals gemäß dem Betriebsstatus des LTE-Netzwerks und der voreingestellten Regel, wobei der erste WiFi-Kanal ein WiFi-Kanal ist, der einen Kanalinterferenzwert von weniger als einem ersten Schwellwert aufweist; und
Auswählen (a2) eines nicht belegten Kanals im ersten WiFi-Kanal als den WiFi-Betriebskanal;
**dadurch gekennzeichnet, dass** der Kanalinterferenzparameter ein Durchsatz ist und das Bestimmen des WiFi-Betriebskanals gemäß dem Betriebsstatus des LTE-Netzwerks und einer voreingestellten Regel Folgendes umfasst:
Bestimmen (b1) eines zweiten WiFi-Kanals gemäß dem Betriebsstatus des LTE-Netzwerks und der voreingestellten Regel, wobei der zweite WiFi-Kanal ein WiFi-Kanal ist, der einen Durchsatz aufweist, der größer als oder gleich einem zweiten Schwellwert ist; und
Auswählen (b2) eines nicht belegten Kanals im zweiten WiFi-Kanal als den WiFi-Betriebskanal.

2. Verfahren nach Anspruch 1, wobei das Verfahren vor dem Bestimmen, ob ein LTE-Netzwerk in Betrieb ist, ferner Folgendes umfasst: Aktivieren (S200) einer WiFi-Hotspotfunktion.

3. Verfahren nach Anspruch 1 oder 2, wobei das Verfahren ferner Folgendes umfasst:
Auswählen (S204) eines nicht belegten Kanals im WiFi-Kanal als den WiFi-Betriebskanal, wenn das LTE-Netzwerk nicht in Betrieb ist.

4. Vorrichtung zum Reduzieren einer Interferenz zwischen WiFi und LTE, das Folgendes umfasst:
eine erste Bestimmungseinheit (401), die dazu ausgelegt ist zu bestimmen, ob ein LTE-Netzwerk in Betrieb ist;
eine Erhaltungseinheit (402), die dazu ausgelegt ist, einen Betriebsstatus des LTE-Netzwerks zu erhalten, wenn die erste Bestimmungseinheit (401) bestimmt, dass das LTE-Netzwerk in Betrieb ist, wobei der Betriebsstatus des LTE-Netzwerks eine Betriebsfrequenz des LTE-Netzwerks umfasst; und
eine zweite Bestimmungseinheit (403), die dazu ausgelegt ist, einen WiFi-Betriebskanal gemäß dem Betriebsstatus des LTE-Netzwerks, der von der Erhaltungseinheit (402) erhalten wird, und einer voreingestellten Regel zu bestimmen, wobei die voreingestellte Regel eine Entsprechung zwischen der Betriebsfrequenz des LTE-Netzwerks und einem Kanalinterferenzparameter zwischen dem LTE-Netzwerk und einem WiFi-Kanal umfasst,
wobei die zweite Bestimmungseinheit (403) eine Bestimmungsuntereinheit (4031) und eine Auswahluntereinheit (4032) umfasst, wobei
die Bestimmungsuntereinheit (4031) zu Folgendem ausgelegt ist: wenn der Kanalinterferenzparameter ein Kanalinterferenzwert ist, Bestimmen eines ersten WiFi-Kanals gemäß dem Betriebsstatus des LTE-Netzwerks und der voreingestellten Regel, wobei der erste WiFi-Kanal ein WiFi-Kanal ist, der einen Kanalinterferenzwert von weniger als einem ersten Schwellwert aufweist; und
die Auswahluntereinheit (4032) dazu ausgelegt ist, einen nicht belegten Kanal im ersten WiFi-Kanal als den WiFi-Betriebskanal auszuwählen;
**dadurch gekennzeichnet, dass**:
der Kanalinterferenzparameter ein Durchsatz ist und die Bestimmungsuntereinheit (4031) ferner zu Folgendem ausgelegt ist: Bestimmen eines zweiten WiFi-Kanals gemäß dem Betriebsstatus des LTE-Netzwerks und der voreingestellten Regel, wobei der zweite WiFi-Kanal ein WiFi-Kanal ist, der einen Durchsatz aufweist, der größer als oder gleich einem zweiten Schwellwert ist; und
die Auswahluntereinheit (4032) ferner dazu ausgelegt ist, einen nicht belegten Kanal im zweiten WiFi-Kanal als den WiFi-Betriebskanal auszuwählen.

5. Vorrichtung nach Anspruch 4, wobei die Vorrichtung ferner eine Aktivierungseinheit (404) umfasst, wobei die Aktivierungseinheit (404) zu Folgendem ausgelegt ist:
Aktivieren einer WiFi-Hotspotfunktion, bevor die erste Bestimmungseinheit (401) bestimmt, ob das LTE-Netzwerk in Betrieb ist.

6. Vorrichtung nach Anspruch 4 oder Anspruch 5, wobei die Auswahluntereinheit (4032) ferner dazu ausgelegt ist, einen nicht belegten Kanal im WiFi-Kanal als den WiFi-Betriebskanal auszuwählen, wenn das LTE-Netzwerk nicht in Betrieb ist.

## Revendications

1. Procédé pour réduire le brouillage entre Wi-Fi et LTE, comportant les étapes consistant à :
déterminer (S201) si un réseau LTE est en fonctionnement ;
obtenir (S202) un état de fonctionnement du réseau LTE si le réseau LTE est en fonctionnement, l'état de fonctionnement du réseau LTE comportant une fréquence de fonctionnement du réseau LTE ; et
déterminer (S203) un canal de fonctionnement Wi-Fi selon l'état de fonctionnement du réseau LTE et une règle préétablie, la règle préétablie comportant une correspondance entre la fréquence de fonctionnement du réseau LTE et un paramètre de brouillage de canal entre le réseau LTE et un canal Wi-Fi ;
la détermination d'un canal de fonctionnement Wi-Fi selon l'état de fonctionnement du réseau LTE et une règle préétablie comportant, lorsque le paramètre de brouillage de canal est une valeur de brouillage de canal, les étapes consistant à :
déterminer (a1) un premier canal Wi-Fi selon l'état de fonctionnement du réseau LTE et la règle préétablie, le premier canal Wi-Fi étant un canal Wi-Fi qui présente une valeur de brouillage de canal inférieure à un premier seuil ; et
sélectionner (a2) un canal inoccupé quelconque dans le premier canal Wi-Fi en tant que canal de fonctionnement Wi-Fi ;
**caractérisé en ce que** le paramètre de brouillage de canal est un débit et la détermination d'un canal de fonctionnement Wi-Fi selon l'état de fonctionnement du réseau LTE et une règle préétablie comporte les étapes consistant à :
déterminer (b1) un deuxième canal Wi-Fi selon l'état de fonctionnement du réseau LTE et la règle préétablie, le deuxième canal Wi-Fi étant un canal Wi-Fi qui présente un débit supérieur ou égal à un deuxième seuil ; et
sélectionner (b2) un canal inoccupé quelconque dans le deuxième canal Wi-Fi en tant que canal de fonctionnement Wi-Fi.

2. Procédé selon la revendication 1, le procédé comportant en outre, avant de déterminer si un réseau LTE est en fonctionnement, l'étape consistant à :
activer (S200) une fonction de point d'accès Wi-Fi.

3. Procédé selon la revendication 1 ou la revendication 2, le procédé comportant en outre l'étape consistant à :
sélectionner (S204) un canal inoccupé quelconque dans le canal Wi-Fi en tant que canal de fonctionnement Wi-Fi si le réseau LTE n'est pas en fonctionnement.

4. Appareil pour réduire le brouillage entre Wi-Fi et LTE, comportant :
une première unité (401) de détermination, configurée pour déterminer si un réseau LTE est en fonctionnement ;
une unité (402) d'obtention, configurée pour obtenir un état de fonctionnement du réseau LTE lorsque la première unité (401) de détermination détermine que le réseau LTE est en fonctionnement, l'état de fonctionnement du réseau LTE comportant une fréquence de fonctionnement du réseau LTE ; et
une deuxième unité (403) de détermination, configurée pour déterminer un canal de fonctionnement Wi-Fi selon l'état de fonctionnement du réseau LTE qui est obtenu par l'unité (402) d'obtention et une règle préétablie, la règle préétablie comportant une correspondance entre la fréquence de fonctionnement du réseau LTE et un paramètre de brouillage de canal entre le réseau LTE et un canal Wi-Fi,
la deuxième unité (403) de détermination comportant une sous-unité (4031) de détermination et une sous-unité (4032) de sélection,
la sous-unité (4031) de détermination étant configurée pour : lorsque le paramètre de brouillage de canal est une valeur de brouillage de canal, déterminer un premier canal Wi-Fi selon l'état de fonctionnement du réseau LTE et la règle préétablie, le premier canal Wi-Fi étant un canal Wi-Fi qui présente une valeur de brouillage de canal inférieure à un premier seuil ; et
la sous-unité (4032) de sélection étant configurée pour sélectionner un canal inoccupé quelconque dans le premier canal Wi-Fi en tant que canal de fonctionnement Wi-Fi ;
**caractérisé en ce que** :
le paramètre de brouillage de canal est un débit et la sous-unité (4031) de détermination est en outre configurée pour :
déterminer un deuxième canal Wi-Fi selon l'état de fonctionnement du réseau LTE et la règle préétablie, le deuxième canal Wi-Fi étant un canal Wi-Fi qui présente un débit supérieur ou égal à un deuxième seuil ; et
la sous-unité (4032) de sélection est en outre configurée pour sélectionner un canal inoccupé quelconque dans le deuxième canal Wi-Fi en tant que canal de fonctionnement Wi-Fi.

5. Appareil selon la revendication 4, l'appareil comportant en outre une unité (404) d'activation, l'unité (404) d'activation étant configurée pour : avant que la première unité (401) de détermination détermine si le réseau LTE est en fonctionnement, activer une fonction de point d'accès Wi-Fi.

6. Appareil selon la revendication 4 ou la revendication 5, la sous-unité (4032) de sélection étant en outre configurée pour sélectionner un canal inoccupé quelconque dans le canal Wi-Fi en tant que canal de fonctionnement Wi-Fi si le réseau LTE n'est pas en fonctionnement.
